# EUROPEAN PATENT APPLICATION

(11) **EP 4 406 980 A1**
(43) Date of publication of application: **31.07.2024**
(21) Application number: 23807841.4
(22) Date of filing: 12.05.2023
(51) Int. Cl.: C08F 14/06, C08F 2/01, C08F 2/18, C08F 6/00

(54) **METHOD FOR PREPARING VINYL CHLORIDE-BASED POLYMER**

(30) Priority: 18.05.2022 KR 20220060799; 10.05.2023 KR 20230060747
(71) Applicant: LG Chem, Ltd., Yeongdeungpo-gu Seoul 07336 (KR)
(72) Inventor: BAE, Heung Kwon, Daejeon 34122 (KR); LEE, Se Woong, Daejeon 34122 (KR); SEO, Eun Byeol, Daejeon 34122 (KR); HA, Hyun Kyou, Daejeon 34122 (KR); KIM, Kun Ji, Daejeon 34122 (KR)
(74) Representative: Goddar, Heinz J.
(86) International application number: PCT/KR2023/006455
(87) International publication number: WO 2023/224321

(57) **Abstract**

The present invention relates to a method of preparing a vinyl chloride-based polymer in a polymerization device including: a polymerization reactor; a reflux condenser connected to the polymerization reactor; and a recovery pipe connected to the reflux condenser, the method including: initiating a polymerization by adding a first vinyl chloride-based monomer and an initiator into the polymerization reactor; and recovering a second vinyl chloride-based monomer from the polymerization reactor through the recovery pipe, and performing a polymerization while adding a third vinyl chloride-based monomer into the polymerization reactor, wherein a content of the initiator is 0.105 to 0.110 parts by weight based on 100 parts by weight of a content of the first vinyl chloride-based monomer.

## Description

### CROSS-REFERENCE TO RELATED APPLICATION

The present invention claims the benefit of priority based on Korean Patent Application No. 10-2022-0060799, filed on May 18, 2022 and Korean Patent Application No. 10-2023-0060747, filed on May 10, 2023, all contents disclosed in the literature of the corresponding Korean patent applications are incorporated as a part of this specification.

### [Technical field]

The present invention relates to a method of preparing a vinyl chloride-based polymer, and more particularly, to a method of preparing a vinyl chloride-based polymer, which is capable of easily controlling heat generated during the preparation of the vinyl chloride-based polymer and increasing a production amount of the vinyl chloride-based polymer.

### [Background Art]

Polymerization of vinyl chloride-based monomers is usually performed in a batch manner, and after adding the vinyl chloride-based monomers, an initiator, and a dispersant, water vapor is applied to a jacket of a polymerization reactor to raise a polymerization temperature to 40 to 80 °C, and a polymerization is initiated. The polymerization of these vinyl chloride-based monomers is an exothermic reaction. When reaction heat is generated, cooling water flows through the jacket or through a reflux condenser located above the polymerization reactor to condense a gas phase vinyl chloride-based monomer during the reaction, thereby controlling the reaction temperature to prepare a vinyl chloride-based polymer.

Monomers used in the preparation of the vinyl chloride-based polymer are classified into pure vinyl chloride-based monomers (new vinyl chloride-based monomers) and unreacted vinyl chloride-based monomers (reused vinyl chloride-based monomers), and these monomers are mixed and used for polymerization.

In a polymerization process of the vinyl chloride-based monomer, when a polymerization conversion rate reaches 60 to 70%, it is common to recover the unreacted vinyl chloride-based monomer and terminate the polymerization. Unlike the pure vinyl chloride-based monomer, the recovered unreacted vinyl chloride-based monomer has already participated in a previous polymerization process and is recovered and stored in a storage tank. For this reason, in the unreacted vinyl chloride-based monomer, nitrogen or oxygen, which may be introduced from the outside during polymerization, and non-condensable gas generated as an initiator decomposes are present. Since this non-condensable gas has a lower density than the vinyl chloride-based monomer, it accumulates at the top of the reflux condenser during polymerization, thereby hindering the condensation of the vinyl chloride-based monomer, and furthermore, reducing the heat control performance of the reflux condenser to prolong a polymerization time and cause deterioration in quality and productivity.

To solve this problem, KR2013-0025515A has been proposed. In this published patent, productivity was improved by using a polymerization reactor equipped with a reflux condenser and effectively controlling reaction heat in the reflux condenser by exhausting the non-condensable gas generated during polymerization. In addition, in this published patent, the problem of backflow of foam generated by the ejection of non-condensable gas and scale generation inside the reflux condenser was solved by using a foam detector.

However, a problem occurred due to the ejection after the non-condensable gas was added into the polymerization reactor together with the unreacted vinyl chloride-based monomer. This problem was prevented by removing the non-condensable gas through the reflux condenser or using a device, such as a foam detector, to prevent the reflux of the foam and the generation of scale inside the reflux condenser.

This conventional approach method has reduced productivity by reducing heat control performance in a polymerization process. In addition, there was a problem such as having to provide a separate device such as a form detector. Nevertheless, there are disadvantages in that the stability of the process is inhibited, productivity is hindered, and it is difficult to sufficiently remove the non-condensable gas, thereby adversely affecting the quality of the obtained vinyl chloride polymer.

### [Related Art Document]

### (Patent Document)

(Patent Document 1) KR2013-0025515A

### [Disclosure]

### [Technical Problem]

The present invention is directed to providing a method of preparing a vinyl chloride-based polymer, which is capable of easily controlling heat generated during the preparation of the vinyl chloride-based polymer and increasing a production amount of the vinyl chloride-based polymer.

### [Technical Solution]

In order to solve the above problems, (1) the present invention provides a method of preparing a vinyl chloride-based polymer in a polymerization device including: a polymerization reactor; a reflux condenser connected to the polymerization reactor; and a recovery pipe connected to the reflux condenser, the method including: initiating a polymerization by adding a first vinyl chloride-based monomer and an initiator into the polymerization reactor; and recovering a second vinyl chloride-based monomer from the polymerization reactor through the recovery pipe, and performing a polymerization while adding a third vinyl chloride-based monomer into the polymerization reactor, wherein a content of the initiator is 0.105 to 0.110 parts by weight based on 100 parts by weight of a content of the first vinyl chloride-based monomer.

In addition, (2) according to the present invention, in the method of preparing a vinyl chloride-based polymer of (1), the initiator may be present in an amount of 0.107 to 0.109 parts by weight based on 100 parts by weight of the content of the first vinyl chloride-based monomer.

In addition, (3) according to the present invention, in the method of preparing a vinyl chloride-based polymer of (1) or (2), a weight ratio of the second vinyl chloride-based monomer and the third vinyl chloride-based monomer may be 1.0: 1.0 to 10.0.

In addition, (4) according to the present invention, in the method of preparing a vinyl chloride-based polymer of any one of (1) to (3), a content of the second vinyl chloride-based monomer may be 2.0 to 5.0 parts by weight based on 100 parts by weight of the content of the first vinyl chloride-based monomer.

In addition, (5) according to the present invention, in the method of preparing a vinyl chloride-based polymer of any one of (1) to (4), a content of the third vinyl chloride-based monomer may be 15.0 to 25.0 parts by weight based on 100 parts by weight of the content of the first vinyl chloride-based monomer.

In addition, (6) according to the present invention, in the method of preparing a vinyl chloride-based polymer of any one of (1) to (5), the second vinyl chloride-based monomer may be continuously recovered through the recovery pipe from a time when a polymerization conversion rate is 0% to 10% until the polymerization conversion rate reaches 60 to 80%.

In addition, (7) according to the present invention, in the method of preparing a vinyl chloride-based polymer of any one of (1) to (6), the third vinyl chloride-based monomer may be continuously added into the polymerization reactor from a time when a polymerization conversion rate is 0% to 10% until the polymerization conversion rate reaches 60 to 80%.

In addition, (8) according to the present invention, in the method of preparing a vinyl chloride-based polymer of any one of (1) to (7), wherein a difference between the pressure (P1) of a connection portion between the polymerization reactor and the reflux condenser and the pressure (P2) of a connection portion between the reflux condenser and the recovery pipe (ΔP = P1 - P2) may be 0.01 to 0.20 kg/cm².

In addition, (9) according to the present invention, in the method of preparing a vinyl chloride-based polymer of any one of (1) to (8), wherein the polymerization may be a suspension polymerization.

### [Advantageous Effects]

Since a method of preparing a vinyl chloride-based polymer of the present invention recovers a vinyl chloride-based monomer during polymerization, heat generated during the polymerization can be easily controlled.

In addition, since a method of preparing a vinyl chloride-based polymer of the present invention uses a certain amount of an initiator, a production amount of the vinyl chloride-based polymer can be increased.

### [Brief Description of Drawings]

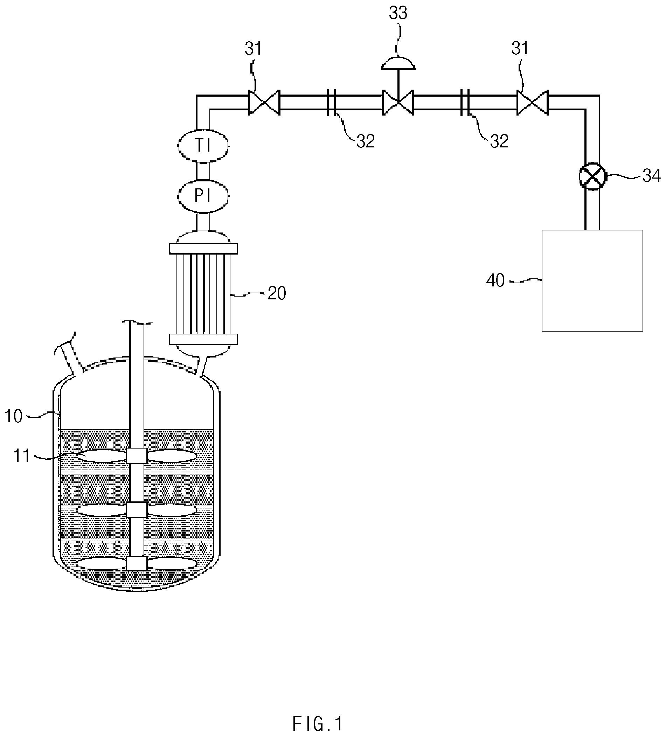

FIG. 1 is a diagram showing an example of a polymerization device used in a method of preparing a vinyl chloride-based polymer according to one embodiment of the present invention.

### [Best Mode for Implementation of the Invention]

Hereinafter, the present invention will be described in more detail to help the understanding of the present invention.

At this time, the terms or words used in the specification and claims should not be interpreted as being limited to conventional or dictionary meanings, and the terms or words should be interpreted as a meaning and a concept that are consistent with the technical concept of the present invention based on the principle that the inventor can appropriately define the concepts of terms in order to explain his/her own invention in the best way.

### Definition of Terms

In the present invention, the term "vinyl chloride-based monomer" may mean a pure vinyl chloride-based monomer as well as a mixture of a vinyl chloride-based monomer as a main component and a vinyl-based monomer copolymerizable therewith. The vinyl-based monomer copolymerizable with the vinyl chloride-based monomer may be one or more selected from the group consisting of ethylene, propylene, vinyl acetate, vinyl propionate, acrylonitrile, methyl vinyl ether, ethyl vinyl ether, acrylic acid, methacrylic acid, itaconic acid, and maleic acid.

In the present invention, the term "first and third vinyl chloride-based monomers" may be pure vinyl chloride-based monomers that have not participated in polymerization. In addition, in the present invention, the term "second vinyl chloride-based monomer" may mean a monomer that has participated but not reacted in polymerization among the first vinyl chloride-based monomers. Since the second vinyl chloride-based monomer is recovered after participating in polymerization, in the unreacted vinyl chloride-based monomer, nitrogen or oxygen, which may be introduced from the outside during polymerization, and non-condensable gas generated as an initiator decomposes may be present.

In the present invention, the term "initiator" may be one or more selected from the group consisting of diacyl peroxides such as dicumyl peroxide, dipentyl peroxide, di-3,5,5-trimethylhexanoyl peroxide, and dilauroyl peroxide; diisopropylperoxydicarbonate, di-sec-butylperoxydicarbonate, di-(2-ethylhexyl)peroxydicarbonate, t-butylperoxyneodecanoate, t-butylperoxyneoheptanoate, t-amylperoxy neodecanoate, cumyl peroxyneodecanoate, cumyl peroxyneoheptanoate, 1,1,3,3-tetramethylbutyl peroxyneodecanoate, azobis-2,4-dimethylvaleronitrile, potassium persulfate, and ammonium persulfate.

In the present invention, the term "suspending agent" may be one or more selected from the group consisting of partially saponified vinyl acetate resin, cellulose hydroxide, gelatin, acrylate, an acrylate copolymer, polyvinyl alcohol, polyethylene glycol, polyvinylpyrrolidone, and a maleic anhydride/styrene copolymer.

In the present invention, the term "aqueous solvent" may be deionized water or pure water.

In the present invention, the term "polymerization conversion rate" may be calculated by the following equation.

Polymerization conversion rate (%) = {(weight of vinyl chloride-based monomers added until polymerization is completed) - (weight of unreacted monomers at the time when polymerization conversion rate is measured)} / (weight of vinyl chloride-based monomers added until polymerization is completed) × 100

### Method of preparing vinyl chloride-based polymer

A method of preparing a vinyl chloride-based polymer according to an embodiment of the present invention is a method of preparing a vinyl chloride-based polymer in a polymerization device including: a polymerization reactor; a reflux condenser connected to the polymerization reactor; and a recovery pipe connected to the reflux condenser, the method including: initiating a polymerization by adding a first vinyl chloride-based monomer and an initiator into the polymerization reactor; and recovering a second vinyl chloride-based monomer from the polymerization reactor through the recovery pipe, and performing a polymerization while adding a third vinyl chloride-based monomer into the polymerization reactor, wherein a content of the initiator is 0.105 to 0.110 parts by weight based on 100 parts by weight of a content of the first vinyl chloride-based monomer.

Here, a content of the initiator may be 0.105 to 0.110 parts by weight, preferably 0.107 to 0.109 parts by weight, based on 100 parts by weight of the content of the first vinyl chloride-based monomer. When the content of the initiator is less than the above-mentioned conditions, it is difficult to control heat by using the reflux condenser during polymerization, and the polymerization time becomes long. When the content of the initiator exceeds the above-mentioned conditions, the thermal stability of the vinyl chloride-based polymer may deteriorate. In addition, since the heat control range of the polymerization reactor is exceeded and the heat control amount of the reflux condenser increases, production efficiency is lowered.

A weight ratio of the second vinyl chloride-based monomer and the third vinyl chloride-based monomer may be 1:1.0 to 10.0, preferably 1:3.0 to 8.0. When the above-described condition is satisfied, since pressure is also discharged when the second vinyl chloride-based monomer is recovered, heat control from the polymerization reactor becomes easy. In addition, even when the pressure rises due to the addition of the third vinyl chloride-based monomer and heat generation occurs, and polymerization heat is generated by polymerization of the third vinyl chloride-based monomer, since the third vinyl chloride-based monomer is added from the outside and is in a cold state, the heat generation and polymerization heat described above may be controlled.

A content of the second vinyl chloride-based monomer may be 2.0 to 5.0 parts by weight, preferably 2.5 to 4.5 parts by weight, more preferably 3.0 to 4.0 parts by weight, based on 100 parts by weight of the content of the first vinyl chloride-based monomer. When the above-described condition is satisfied, since bubbles generated by the suspending agent do not flow into the reflux condenser together with the second vinyl chloride-based monomer, contamination of the reflux condenser may be minimized. In addition, since the use of the reflux condenser may be reduced by removing the second vinyl chloride-based monomer through the recovery pipe without being condensed in the reflux condenser, the maintenance interval of a polymerization device may be extended. In addition, the second vinyl chloride-based monomer, which is difficult to reuse because it includes many impurities, may be separately removed through a recovery pipe during polymerization while minimizing the effect on the temperature and pressure of the polymerization reactor.

Meanwhile, in radical polymerization performed by the initiator, conventionally, a polymerization rate according to a radical polymerization rate equation may be expressed as an amount of conversion of monomers to polymers per hour. Since a significant amount of unreacted initiator and monomers are present during polymerization, the polymerization rate is fast, and heat generation may occur during polymerization. However, since an amount of unreacted initiators and monomers present in a gas phase and aqueous phase is remarkably small after polymerization, heat generation due to polymerization hardly occurs. Due to the above reasons, when the second vinyl chloride-based monomer is recovered through the recovery pipe during polymerization, the effect of removing the polymerization heat due to the heat generation during polymerization may be maximized.

From the point where the polymerization conversion rate is 0% to 10% until the point where the polymerization conversion rate reaches 60 to 80%, preferably, from the point where the polymerization conversion rate is 0% to 5% until the point where the polymerization conversion rate reaches 65 to 85%, the second vinyl chloride-based monomer may be continuously recovered through the recovery pipe. When the above-described condition is satisfied, since the second vinyl chloride-based monomer is recovered at a time when polymerization heat is the greatest during batch polymerization, the heat control efficiency of the reflux condenser may be increased to improve process stability.

A content of the third vinyl chloride-based monomer may be 15.0 to 25.0 parts by weight, preferably 16.0 to 23.0 parts by weight, more preferably 18.0 to 20.0 parts by weight, based on 100 parts by weight of the content of the first vinyl chloride-based monomer. Since the third vinyl chloride-based monomer is added from the outside of the polymerization device, it has a significantly lower temperature than the inside of the polymerization device, and as a result, the temperature inside the polymerization device is lowered, thereby facilitating heat control.

The time of continuous addition of the third vinyl chloride-based monomer may be the same as or different from the time of continuous recovery of the second vinyl chloride-based monomer, and the third vinyl chloride-based monomer may be continuously added into the polymerization reactor from the point where the polymerization conversion rate is 0% to 10% until the point where the polymerization conversion rate reaches 60 to 80%, preferably, from the point where the polymerization conversion rate is 0% to 5% until the point where the polymerization conversion rate reaches 65 to 85%. When the above-described condition is satisfied, since the third vinyl chloride-based monomer is continuously added at a time when polymerization heat is the greatest during batch polymerization, the heat control efficiency of the reflux condenser may be increased to improve process stability.

Although it is preferable to add only vinyl chloride-based monomers into the polymerization reactor without alkyl chloride, this is not practically possible, and therefore, when the first vinyl chloride-based monomer is added, the alkyl chloride may be added in a small amount, specifically, in an amount of 5 parts by weight or less, preferably 3 parts by weight or less, based on 100 parts by weight of the first vinyl chloride-based monomer. In addition, when the third vinyl chloride-based monomer is added, the alkyl chloride may be added in a small amount, specifically, in an amount of 5 parts by weight or less, preferably 3 parts by weight or less, based on 100 parts by weight of the third vinyl chloride-based monomer. When the above-mentioned range is satisfied, it is possible to minimize the decrease in a final polymerization conversion rate and the efficiency of the reflux condenser.

Here, the alkyl chloride may be one or more selected from the group consisting of methyl chloride, ethyl chloride, and propyl chloride, and specifically, may be methyl chloride that is also produced during the preparation of the vinyl chloride-based monomer.

Meanwhile, in the polymerization, a difference between the pressure (P1) of a connection portion between the polymerization reactor and the reflux condenser and the pressure (P2) of a connection portion between the reflux condenser and the recovery pipe (ΔP = P1 - P2) may be 0.01 to 0.20 kg/cm², preferably 0.01 to 0.15 kg/cm², more preferably 0.02 to 0.12 kg/cm². When the above range is satisfied, the second vinyl chloride-based monomer may be easily discharged to the outside of the polymerization reactor through the recovery pipe. In addition, since the non-condensable gas in the polymerization reactor may also be removed, the polymerization time may be shortened and production efficiency may be improved.

The polymerization may be suspension polymerization, and specifically, a suspending agent, an initiator, and an aqueous solvent may be used.

Meanwhile, a polymerization device used in the method of preparing a vinyl chloride-based polymer according to one embodiment of the present invention is not particularly limited as long as it is used in the technical field of the present invention, but will be described with reference to FIG. 1 for better understanding.

Referring to FIG. 1, the polymerization device includes a polymerization reactor 10, a reflux condenser 20 connected to the polymerization reactor 10, and a recovery pipe 30 connected to the reflux condenser 20.

The polymerization reactor 10 may have a pipe for injecting raw materials located at an upper portion, and may be equipped with a temperature controller (not shown) for controlling internal temperature. In addition, the polymerization reactor 10 may be equipped with a jacket (not shown) on an outer wall and a baffle inside in order to control reaction heat generated during the reaction. Cooling water or frozen water may be supplied to the jacket and the baffle. The baffle may be cylindrical, D-shaped, loop-shaped or finger-shaped. The pressure of the polymerization reactor 10 may change together with the change in internal temperature. The pressure P1 of a connection portion between the polymerization reactor 10 and the reflux condenser 20 may also change according to the temperature inside the polymerization reactor 10 and the temperature inside the reflux condenser 20. The polymerization reactor 10 may include a general stirrer 11. When the stirrer 11 is a blade type, it may be a paddle type, a pitched paddle type, a turbine type, a bluemagine type, or a Pfaudler type.

In order to control a content of the second vinyl chloride-based monomer, the recovery pipe 30 may be equipped with a thermometer TI, a pressure gauge PI, an auxiliary valve 31 of a pressure gauge automatic control valve, an orifice 32, a pressure gauge automatic control valve 33, and a flow meter 34. In addition, the pressure gauge automatic control valve 33 may adjust an opening rate to 1 to 80%, preferably 1 to 70% for process convenience. Meanwhile, the opening rate of the pressure gauge automatic control valve is automatically adjusted according to the content of the second vinyl chloride-based monomer actually recovered and the content of a target second vinyl chloride-based monomer.

The polymerization device may be connected to a recovery tank 40 for storing the second vinyl chloride-based monomer recovered through the recovery pipe 30.

Hereinafter, preferred examples are presented to help the understanding of the present invention, but the following examples are merely illustrative of the present invention, and it will be apparent to those skilled in the art that various changes and modifications are possible within the scope and spirit of the present invention, and it goes without saying that such variations and modifications fall within the scope of the appended claims.

### Example 1

A vinyl chloride monomer was polymerized in the following manner using a polymerization device including a 1 m³ polymerization reactor, a reflux condenser connected to the polymerization reactor and controlling temperature during polymerization, and a recovery pipe connected to the reflux condenser, recovering a second vinyl chloride-based monomer, which is an unreacted monomer, in the polymerization reactor, and equipped with a pressure gauge automatic control valve for adjusting an opening rate.

First, 140 parts by weight of deionized water, an aqueous solution (concentration: 70% by weight) including 0.105 parts by weight of t-butyl peroxy neocarbonate as an initiator, and 0.1 parts by weight of an aqueous polyvinyl alcohol solution (concentration: 5% by weight) were added into the polymerization reactor, and after a vacuum was applied, 100 parts by weight of vinyl chloride was added as the first vinyl chloride-based monomer. Then, polymerization was initiated while raising the temperature of the polymerization reactor to 58 °C. At this time, the pressure (P1) of a connection portion between the polymerization reactor and the reflux condenser was 8.50 kg/cm², and the pressure (P2) of a connection portion between the reflux condenser and the recovery pipe was set to 8.40 kg/cm².

Then, from the time when a polymerization conversion rate was 20% to the time when the polymerization conversion rate reached 70%, 3.3 parts by weight of vinyl chloride as the second vinyl chloride-based monomer was continuously recovered through the reflux condenser connected to the polymerization reactor and the recovery pipe, and discharged to a recovery tank. In addition, from the time when a polymerization conversion rate was 0% to the time when the polymerization conversion rate reached 65%, 18.3 parts by weight of vinyl chloride as a third vinyl chloride-based monomer was continuously added. At this time, an opening rate of a pressure gauge automatic control valve (PICV) of the recovery pipe was 6%.

Then, when the pressure (P1) of a connection portion between the polymerization reactor and the reflux condenser reached 6.8 kg/cm², the vinyl chloride-based monomer and methyl chloride remaining in the polymerization reactor were recovered through a recycling pipe, and polymerization was completed. At this time, the total polymerization time was 152 minutes. Then, a polymer slurry was recovered and separated into wet vinyl chloride polymer powder and water in a centrifuge, and then the remaining water in the wet vinyl chloride polymer powder was hot air dried in a fluidized bed dryer and subjected to a screening process in a screening facility to obtain 98.3 parts by weight of the dry vinyl chloride polymer powder.

### Example 2

98.3 parts by weight of a dry vinyl chloride-based polymer powder was obtained in the same manner as in Example 1, except that a content of t-butyl peroxy neocarbonate was changed to 0.107 parts by weight. At this time, the total polymerization time was 149 minutes.

### Example 3

98.3 parts by weight of a dry vinyl chloride-based polymer powder was obtained in the same manner as in Example 1, except that a content of t-butyl peroxy neocarbonate was changed to 0.109 parts by weight. At this time, the total polymerization time was 146 minutes.

### Example 4

98.3 parts by weight of a dry vinyl chloride-based polymer powder was obtained in the same manner as in Example 1, except that a content of t-butyl peroxy neocarbonate was changed to 0.110 parts by weight. At this time, the total polymerization time was 143 minutes.

### Example 5

101.7 parts by weight of a dry vinyl chloride-based polymer powder was obtained in the same manner as in Example 1, except that a content of a third vinyl chloride-based monomer was changed to 20 parts by weight. At this time, the total polymerization time was 154 minutes.

### Comparative Example 1

98.3 parts by weight of a dry vinyl chloride-based polymer powder was obtained in the same manner as in Example 1, except that a content of t-butyl peroxy neocarbonate was changed to 0.100 parts by weight, and the pressure (P2) of a connection portion between the reflux condenser and the vinyl chloride recovery pipe and an opening rate of a pressure gauge automatic control valve were changed as shown in Table 2 below. At this time, the total polymerization time was 162 minutes.

### Comparative Example 2

98.3 parts by weight of a dry vinyl chloride-based polymer powder was obtained in the same manner as in Example 1, except that a content of t-butyl peroxy neocarbonate was changed to 0.115 parts by weight, and the pressure (P1) of a connection portion between the polymerization reactor and the reflux condenser, the pressure (P2) of a connection portion between the reflux condenser and the vinyl chloride recovery pipe and an opening rate of a pressure gauge automatic control valve were changed as shown in Table 2 below. At this time, the total polymerization time was 152 minutes.

### Comparative Example 3

101.7 parts by weight of a dry vinyl chloride-based polymer powder was obtained in the same manner as in Example 1, except that the second vinyl chloride-based monomer was not recovered, 15 parts by weight of the third vinyl chloride-based monomer was added, and the pressure (P2) of a connection portion between the reflux condenser and the vinyl chloride recovery pipe and an opening rate of a pressure gauge automatic control valve were changed as shown in Table 2 below. At this time, a total polymerization time was 161 minutes.

### Comparative Example 4

98.3 parts by weight of a dry vinyl chloride-based polymer powder was obtained in the same manner as in Example 1, except that the second vinyl chloride-based monomer was not recovered, a content of t-butyl peroxy neocarbonate was changed to 0.105 parts by weight, 15 parts by weight of the third vinyl chloride-based monomer was added, and the pressure (P2) of a connection portion between the reflux condenser and the vinyl chloride recovery pipe and an opening rate of a pressure gauge automatic control valve were changed as shown in Table 2 below. At this time, the total polymerization time was 159 minutes.

### Experimental Example

The temperature (°C) of cooling water added into the reflux condenser during polymerization, the temperature (°C) of cooling water discharged after passing through the reflux condenser after introduction, and a flow rate (ton/hr) of cooling water added during polymerization were substituted into the following equation to calculate a heat control amount of the reflux condenser. Heat control amount of reflux condenser (Kcal) = (Flow rate of cooling water added dring polymerization) × {(Temperature of cooling water discharged from reflux condenser) - (Temperature of cooling water added into reflux condenser)}

**[Table 1]**

| Classification | Example 1 | Example 2 | Example 3 | Example 4 | Example 5 |
|---|---|---|---|---|---|
| First vinyl chloride-based monomer (parts by weight) | 100 | 100 | 100 | 100 | 100 |
| Initiator (parts by weight) | 0.105 | 0.107 | 0.109 | 0.110 | 0.105 |
| Second vinyl chloride-based monomer (parts by weight) | 3.3 | 3.3 | 3.3 | 3.3 | 3.3 |
| Third vinyl chloride-based monomer (parts by weight) | 18.3 | 18.3 | 18.3 | 18.3 | 20.0 |
| P1 (kg/cm²) | 8.50 | 8.50 | 8.50 | 8.50 | 8.60 |
| P2 (kg/cm²) | 8.40 | 8.40 | 8.40 | 8.40 | 8.40 |
| Opening rate of PICV (%) | 6 | 6 | 6 | 6 | 6 |
| Orifice diameter (mm) | 3 | 3 | 3 | 3 | 3 |
| Production amount of vinyl chloride-based polymer (parts by weight) | 98.3 | 98.3 | 98.3 | 98.3 | 101.7 |
| Total polymerization time (minutes) | 152 | 149 | 146 | 143 | 154 |
| Heat control amount of reflux condenser during polymerization (Kcal) | 74,689 | 74,720 | 74,760 | 74,800 | 77,203 |

**[Table 2]**

| Classification | Comparative Example 1 | Comparative Example 2 | Comparative Example 3 | Comparative Example 4 |
|---|---|---|---|---|
| First vinyl chloride-based monomer (parts by weight) | 100 | 100 | 100 | 100 |
| Initiator (parts by weight) | 0.100 | 0.115 | 0.100 | 0.105 |
| Second vinyl chloride-based monomer (parts by weight) | 3.3 | 3.3 | 0.0 | 0.0 |
| Third vinyl chloride-based monomer (parts by weight) | 18.3 | 18.3 | 15.0 | 15.0 |
| P1 (kg/cm²) | 8.50 | 8.70 | 8.50 | 8.50 |
| P2 (kg/cm²) | 8.50 | 8.60 | - | - |
| Opening rate of PICV (%) | 4 | 8 | 0 | 0 |
| Orifice diameter (mm) | 3 | 3 | - | - |
| Production amount of vinyl chloride-based polymer (parts by weight) | 98.3 | 98.3 | 101.7 | 98.3 |
| Total polymerization time (minutes) | 162 | 152 | 161 | 159 |
| Heat control amount of reflux condenser during polymerization (Kcal) | 74,300 | 79,300 | 77,024 | 77,783 |

Referring to Tables 1 and 2, Examples 1 to 5, in which a content of an initiator was 0.105 to 0.110 parts by weight based on 100 parts by weight of the first vinyl chloride-based monomer, had a short total polymerization time and good heat control, so that the amount of heat controlled from the reflux condenser during polymerization was reduced. However, in Comparative Example 1 in which a content of the initiator was 0.100 parts by weight based on 100 parts by weight of the first vinyl chloride-based monomer, the heat removal was good and a heat control amount of the reflux condenser during polymerization was small, but the total polymerization time was long, so that production efficiency was lowered. In Comparative Example 2 in which a content of the initiator was 0.115 parts by weight based on 100 parts by weight of the first vinyl chloride-based monomer, the total polymerization time was equivalent to that of Example 1, but heat control was difficult, so that a heat control amount of the reflux condenser during polymerization was increased.

Meanwhile, since Comparative Examples 1 and 2 were different from Examples 1 to 5 in an amount of the added initiator, a heat generation amount was different, and thus P1, P2, and the opening rate of PICV were set differently.

In addition, although Comparative Example 3, in which the content of the initiator was 0.100 parts by weight based on 100 parts by weight of the first vinyl chloride-based monomer, was good at controlling heat, so that an amount of heat control in the reflux condenser during polymerization was small, since the second vinyl chloride-based monomer was not recovered during polymerization, the total polymerization time increased, resulting in reduced production efficiency.

In addition, in the case of Comparative Example 4 in which the content of the initiator was 0.105 parts by weight based on 100 parts by weight of the first vinyl chloride-based monomer, the second vinyl chloride-based monomer was not recovered during polymerization, and thus the total polymerization time increased, resulting in reduced production efficiency. In addition, heat control was difficult, and the heat control amount of the reflux condenser increased during polymerization.

**[Description of Marks in the Figures]**

| | | | |
|---|---|---|---|
| 10: | Polymerization reactor | 11: | Stirrer |
| 20: | Reflux condenser | 30: | Recovery pipe |
| TI: | Thermometer | PI: | Pressure gauge |
| 31: | Auxiliary valve of pressure gauge automatic control valve | | |
| 32: | Orifice | 33: | Pressure gauge automatic control valve |
| 34: | Flow meter | 40: | Recovery tank |

## Claims

1. A method of preparing a vinyl chloride-based polymer in a polymerization device including: a polymerization reactor; a reflux condenser connected to the polymerization reactor; and a recovery pipe connected to the reflux condenser, the method comprising:
initiating a polymerization by adding a first vinyl chloride-based monomer and an initiator into the polymerization reactor; and
recovering a second vinyl chloride-based monomer from the polymerization reactor through the recovery pipe, and performing a polymerization while adding a third vinyl chloride-based monomer into the polymerization reactor,
wherein a content of the initiator is 0.105 to 0.110 parts by weight based on 100 parts by weight of a content of the first vinyl chloride-based monomer.

2. The method of preparing a vinyl chloride-based polymer of claim 1, wherein the content of the initiator is 0.107 to 0.109 parts by weight based on 100 parts by weight of the content of the first vinyl chloride-based monomer.

3. The method of preparing a vinyl chloride-based polymer of claim 1, wherein a weight ratio of the second vinyl chloride-based monomer and the third vinyl chloride-based monomer is 1.0: 1.0 to 10.0.

4. The method of preparing a vinyl chloride-based polymer of claim 1, wherein a content of the second vinyl chloride-based monomer is 2.0 to 5.0 parts by weight based on 100 parts by weight of the content of the first vinyl chloride-based monomer.

5. The method of preparing a vinyl chloride-based polymer of claim 1, wherein a content of the third vinyl chloride-based monomer is 15.0 to 25.0 parts by weight based on 100 parts by weight of the content of the first vinyl chloride-based monomer.

6. The method of preparing a vinyl chloride-based polymer of claim 1, wherein the second vinyl chloride-based monomer is continuously recovered through the recovery pipe from a time when a polymerization conversion rate is 0% to 10% until the polymerization conversion rate reaches 60 to 80%.

7. The method of preparing a vinyl chloride-based polymer of claim 1, wherein the third vinyl chloride-based monomer is continuously added into the polymerization reactor from a time when a polymerization conversion rate is 0% to 10% until the polymerization conversion rate reaches 60 to 80%.

8. The method of preparing a vinyl chloride-based polymer of claim 1, wherein in the polymerization, a difference between a pressure (P1) of a connection portion between the polymerization reactor and the reflux condenser and a pressure (P2) of a connection portion between the reflux condenser and the recovery pipe (ΔP = P1 - P2) is 0.01 to 0.20 kg/cm².

9. The method of preparing a vinyl chloride-based polymer of claim 1, wherein the polymerization is a suspension polymerization.
